# EUROPEAN PATENT APPLICATION

(11) **EP 4 307 584 A1**
(43) Date of publication of application: **17.01.2024**
(21) Application number: 22778639.9
(22) Date of filing: 21.03.2022
(51) Int. Cl.: H04L 1/00

(54) **METHOD FOR DETERMINING DATA TRANSMISSION MODE AND APPARATUS THEREOF**

(30) Priority: 29.03.2021 CN 202110336351
(71) Applicant: Huawei Technologies Co., Ltd., Shenzhen, Guangdong 518129 (CN)
(72) Inventor: FAN, Weiwei, Shenzhen, Guangdong 518129 (CN); CHANG, Ming, Shenzhen, Guangdong 518129 (CN); WANG, Hongli, Shenzhen, Guangdong 518129 (CN); CAO, Xiaowen, Shenzhen, Guangdong 518129 (CN); JIANG, Wenhao, Shenzhen, Guangdong 518129 (CN); DU, Siqing, Shenzhen, Guangdong 518129 (CN); WANG, Guizhen, Shenzhen, Guangdong 518129 (CN)
(74) Representative: Huawei European IPR
(86) International application number: PCT/CN2022/082026
(87) International publication number: WO 2022/206456

(57) **Abstract**

Embodiments of this application relate to a method for determining a data transmission mode and an apparatus thereof. The method includes: sending data packets to a receiving end interface in a first data transmission mode by using a communication link; starting to switch to a second data transmission mode when a switching condition is met; and starting to switch to the first data transmission mode after a target time period starting when the switching to the second data transmission mode is completed, where a data transmission rate in the first data transmission mode is higher than a data transmission rate in the second data transmission mode. According to this application, a transmitting end interface can switch between data transmission modes by using the target time period, so that the transmitting end interface can switch to a corresponding data transmission mode in time. In addition, there is no need to reserve some circuits or modules to notify a corresponding receiving end interface, so that power consumption is further reduced.

## Description

This application claims priority to Chinese Patent Application No. 202110336351.X, filed with the China National Intellectual Property Administration on March 29, 2021 and entitled "METHOD FOR DETERMINING DATA TRANSMISSION MODE AND APPARATUS THEREOF", which is incorporated herein by reference in its entirety.

### TECHNICAL FIELD

This application relates to the field of data processing, and in particular, to a method for determining a data transmission mode and an apparatus thereof.

### BACKGROUND

With improvement of technologies such as photographing, display, and storage, a related interface (for example, a photographing interface) also generates higher power consumption in a data transmission process. In a related technology, each interface (especially an interface for high-speed data transmission) may enter a sleep mode in a time period in which no data is transmitted, where the sleep mode refers to closing some circuits or modules related to data transmission, to reduce power consumption. A feasible technical solution is to notify, in advance, an interface that needs to sleep, so that the interface enters the sleep mode, and notify, when data transmission is required, the interface to end sleep, so that the interface exits the sleep mode and enters a high-speed data transmission mode. It can be learned that, to implement the technical solution, some circuits or modules still need to be reserved to receive a notification. This causes extra power consumption.

### SUMMARY

In view of this, this application provides a method for determining a data transmission mode and an apparatus thereof.

According to a first aspect, embodiments of this application provide a method for determining a data transmission mode, including: sending data packets to a receiving end interface in a first data transmission mode by using a communication link; starting to switch to a second data transmission mode when a switching condition is met; and starting to switch to the first data transmission mode after a target time period starting when the switching to the second data transmission mode is completed, where a data transmission rate in the first data transmission mode is higher than a data transmission rate in the second data transmission mode.

In embodiments of this application, a transmitting end interface may first determine the target time period starting when the switching to the second data transmission mode is completed, and directly switch the data transmission mode after the target time period for the second data transmission mode is reached, so that the transmitting end interface can switch to a corresponding data transmission mode in time. In addition, there is no need to reserve some circuits or modules to notify a corresponding receiving end interface, so that power consumption is further reduced.

According to the first aspect, in a first possible implementation of the first aspect, a first data packet or a last data packet in the data packets includes the target time period; or each data packet in the data packets includes mode information, where the mode information indicates whether the switching to the second data transmission mode starts after a current data packet, and when the mode information indicates that the switching to the second data transmission mode starts after a current data packet, the mode information includes the target time period.

In embodiments of this application, in comparison with a manner in which a long sequence is used to start or end the data transmission mode, the transmitting end interface can send a sleep time period while sending the data packets in a manner in which the target time period is sent by using the data packets, so that the transmitting end interface does not need to reserve a circuit used to send a circuit with a specific sequence (for example, a start sequence or an end sequence). This further reduces power consumption and avoids a probability of an error in a process of sending the long sequence.

According to the first aspect, in a second possible implementation of the first aspect, the data packets are sent by the transmitting end interface to the receiving end interface; and the method further includes: sending the target time period to the receiving end interface by using a first interface, where the first interface is different from the transmitting end interface and the receiving end interface.

In embodiments of this application, a solution that the transmitting end interface implements to send the target time period by using the data packets may test performance of the transmitting end interface, and a skilled person may need to adjust performance of the transmitting end interface. Based on this, in a scenario in which a sleep time period is fixed and a real-time requirement is not high, in the method, the first interface different from the transmitting end interface and the receiving end interface may be used to send the sleep time period, so that an adjustment operation on the transmitting end interface is reduced, and an existing interface (namely, the first interface) is properly used. This implements interface multiplexing.

According to the first aspect, in a third possible implementation of the first aspect, the method further includes: determining an initial time period that lasts after the switching to the second data transmission mode; determining whether the initial time period is longer than link wake-up time, where the link wake-up time indicates time for waking up the communication link; and determining the target time period by using the initial time period and the link wake-up time when the initial time period is longer than the link wake-up time.

In embodiments of this application, the transmitting end interface can determine whether the initial time period is longer than the link wake-up time, and determine the target time period when the initial time period is longer than the link wake-up time, so that the transmitting end interface is prevented from frequently switching the data transmission mode, and preparation time is reserved for the transmitting end interface to switch the data transmission mode by introducing the link wake-up time.

According to the first aspect, in a fourth possible implementation of the first aspect, the target time period is not longer than a remaining time period obtained by subtracting the link wake-up time from the initial time period.

In embodiments of this application, the transmitting end interface may set the target time period for performing in the second data transmission mode to be not longer than the foregoing remaining time period. In this way, the transmitting end interface may have sufficient time to start a related circuit and/or module after the remaining time period is reached, and the communication link also has sufficient time to be woken up.

According to the first aspect, in any one of the first to the fifth possible implementations of the first aspect, the switching condition includes that a quantity of the data packets reaches a preset quantity, or the mode information indicates that the switching to the second data transmission mode starts after the current data packet.

In embodiments of this application, time consistency between the transmitting end interface and the receiving end interface can be ensured by using the foregoing switching condition. In other words, the two end interfaces may simultaneously (or approximately simultaneously) calculate the target time period, so that consistency of data transmission modes can be ensured.

According to the first aspect, in any one of the first to sixth possible implementations of the first aspect, the first data transmission mode includes a high-speed data transmission mode, the second data transmission mode includes a sleep mode, and a transmission rate in the high-speed data transmission mode is higher than a transmission rate in the sleep mode.

In embodiments of this application, the method can be applicable to a transmitting end interface that has both the high-speed data transmission mode and the sleep mode.

According to a second aspect, embodiments of this application provide a method for determining a data transmission mode, including: receiving data packets to a transmitting end interface in a first data transmission mode by using a communication link; starting to switch to a second data transmission mode when a switching condition is met; and starting to switch to the first data transmission mode after a target time period starting when the switching to the second data transmission mode is completed, where a data transmission rate in the first data transmission mode is higher than a data transmission rate in the second data transmission mode.

In embodiments of this application, the receiving end interface may switch the data transmission mode based on the target time period. For the communication link, some circuits do not need to be reserved to receive a start sequence in a specific data transmission mode, and for the receiving end interface, a related module does not need to be reserved to receive and parse the start sequence, thereby further reducing power consumption.

According to the second aspect, in a first possible implementation of the first aspect, a first data packet or a last data packet in the data packets includes the target time period; or each data packet in the data packets includes mode information, where the mode information indicates whether the switching to the second data transmission mode starts after a current data packet, and when the mode information indicates that the switching to the second data transmission mode starts after a current data packet, the mode information includes the target time period.

In embodiments of this application, in comparison with a manner in which a long sequence is used to start or end the data transmission mode, the receiving end interface can receive a sleep time period while receiving the data packets in a manner in which the target time period is received by using the data packets, so that the receiving end interface does not need to reserve a circuit used to receive a circuit with a specific sequence (for example, a start sequence or an end sequence), thereby further reducing power consumption and avoiding a probability of an error in a process of receiving the long sequence.

According to the second aspect, in a second possible implementation of the second aspect, the data packets are received by the receiving end interface from the transmitting end interface; and the method further includes: obtaining the target time period by using a first interface, where the first interface is different from the transmitting end interface and the receiving end interface.

In embodiments of this application, a solution that the receiving end interface implements to obtain the target time period by using the data packets may test performance of the receiving end interface, and a skilled person may need to adjust performance of the receiving end interface. Based on this, in a scenario in which a sleep time period is fixed and a real-time requirement is not high, in the method, the first interface different from the transmitting end interface and the receiving end interface may be used to send the sleep time period, so that an adjustment operation on the receiving end interface is reduced, and an existing interface (namely, the first interface) is properly used. This implements interface multiplexing.

According to the second aspect, in a third possible implementation of the second aspect, the method further includes: determining an initial time period that lasts after the switching to the second data transmission mode; determining whether the initial time period is longer than link wake-up time, where the link wake-up time indicates time for waking up the communication link; and determining the target time period by using the initial time period and the link wake-up time when the initial time period is longer than the link wake-up time.

In embodiments of this application, the receiving end interface can determine whether the initial time period is longer than the link wake-up time, and determine the target time period when the initial time period is longer than the link wake-up time, so that the receiving end interface is prevented from frequently switching the data transmission mode, and preparation time is reserved for the receiving end interface to switch the data transmission mode by introducing the link wake-up time.

According to the second aspect, in a fourth possible implementation of the second aspect, the target time period is not longer than a remaining time period obtained by subtracting the link wake-up time from the initial time period.

In embodiments of this application, the target time period may be set to be not longer than the foregoing remaining time period. In this way, the receiving end interface may have sufficient time to start a related circuit and/or module after the remaining time period is reached, and the communication link also has sufficient time to be woken up.

According to the second aspect, in any one of the first to the fourth possible implementation of the second aspect, the switching condition includes that a quantity of the data packets reaches a preset quantity, or the mode information indicates that the switching to the second data transmission mode starts after the current data packet.

In embodiments of this application, time consistency between the receiving end interface and the transmitting end interface can be ensured by using the foregoing switching condition. In other words, the two end interfaces may simultaneously (or approximately simultaneously) calculate the target time period, so that consistency of data transmission modes can be ensured.

According to the second aspect, in any one of the first to fifth possible implementations of the second aspect, the first data transmission mode includes a high-speed data transmission mode, the second data transmission mode includes a sleep mode, and a transmission rate in the high-speed data transmission mode is higher than a transmission rate in the sleep mode.

In embodiments of this application, the method can be applicable to a receiving end interface that has both the high-speed data transmission mode and the sleep mode.

According to a third aspect, an embodiment of this application provides a data transmission apparatus, configured to perform the method for determining a data transmission mode according to the first aspect or one or more of a plurality of possible implementations of the first aspect.

According to a fourth aspect, an embodiment of this application provides a data transmission apparatus, including a processor and a memory, where the processor is coupled to the memory, and the processor is configured to perform the method for determining a data transmission mode according to one or more of the first aspect or a plurality of possible implementations of the first aspect.

According to a fifth aspect, an embodiment of this application provides a data transmission apparatus, including a processor and a data interface, where the processor performs the method for determining a data transmission mode according to one or more of the first aspect or a plurality of possible implementations of the first aspect by using the data interface.

According to a sixth aspect, an embodiment of this application provides a data transmission apparatus, configured to perform the method for determining a data transmission mode according to one or more of the second aspect or a plurality of possible implementations of the second aspect.

According to a seventh aspect, an embodiment of this application provides a data transmission apparatus, including a processor and a memory, where the processor is coupled to the memory, and the processor is configured to perform the method for determining a data transmission mode according to one or more of the second aspect or a plurality of possible implementations of the second aspect.

According to an eighth aspect, an embodiment of this application provides a data transmission apparatus, including a processor and a data interface, where the processor performs the method for determining a data transmission mode according to one or more of the second aspect or a plurality of possible implementations of the second aspect by using the data interface.

According to a ninth aspect, an embodiment of this application provides a data transmission system, including the data transmission apparatus in the third aspect, the fourth aspect or the fifth aspect and the data transmission apparatus in the sixth aspect, the seventh aspect or the eighth aspect.

According to a tenth aspect, an embodiment of this application provides a non-volatile computer-readable storage medium, where the non-volatile computer-readable storage medium stores computer program instructions, and when the computer program instructions are executed by a processor, the method for determining a data transmission mode according to the first aspect or one or more of a plurality of possible implementations of the first aspect is implemented, or the method for determining a data transmission mode according to one or more of the second aspect or a plurality of possible implementations of the second aspect is implemented.

According to an eleventh aspect, an embodiment of this application provides a computer program product. When the computer program product is run on a computer, the computer is enabled to implement the method for determining a data transmission mode according to the first aspect or one or more of a plurality of possible implementations of the first aspect, or the method for determining a data transmission mode according to one or more of the second aspect or a plurality of possible implementations of the second aspect during execution.

These aspects and other aspects of this application are more concise and more comprehensive in descriptions of the following (a plurality of) embodiments.

### BRIEF DESCRIPTION OF DRAWINGS

Accompanying drawings included in this specification and constituting a part of this specification and this specification jointly show example embodiments, features, and aspects of this application, and are intended to explain principles of this application.
FIG. 1 is a block diagram of a terminal device to which an embodiment of this application is applicable;
FIG. 2 is a diagram of a scenario in which a camera interface in FIG. 1 performs data transmission;
FIG. 3A is a diagram of determining a data transmission mode by a data transmission system in a related technology;
FIG. 3B is a diagram of a shift register output circuit in FIG. 3A;
FIG. 4 is a diagram of determining a data transmission mode by a data transmission system in a related technology;
FIG. 5A is a flowchart of steps of a method for determining a data transmission mode according to an embodiment of this application;
FIG. 5B is a diagram of transmitting a target LPD by using data packets according to an embodiment of this application;
Fig. 6 is a diagram of data packets according to an embodiment of this application;
FIG. 7 is a flowchart of steps of a method for determining a data transmission mode according to an embodiment of this application;
FIG. 8 is a diagram of a transmitting end interface switching from a high-speed data transmission mode to a sleep mode according to an embodiment of this application;
FIG. 9 is a flowchart of steps of a method for determining a data transmission mode according to an embodiment of this application; and
FIG. 10 is a flowchart of steps of a method for determining a data transmission mode according to an embodiment of this application.

### DESCRIPTION OF EMBODIMENTS

The following describes various example embodiments, features, and aspects of this application in detail with reference to the accompanying drawings. Identical reference numerals in the accompanying drawings indicate elements that have same or similar functions. Although various aspects of embodiments are illustrated in the accompanying drawing, the accompanying drawings are not necessarily drawn in proportion unless otherwise specified.

In embodiments of this application, "/" may represent an "or" relationship between associated objects. For example, A/B may represent A or B. "And/or" may indicate that there are three relationships between associated objects. For example, A and/or B may represent the following three cases: Only A exists, both A and B exist, and only B exists. A and B may be singular or plural. To facilitate description of the technical solutions in embodiments of this application, in embodiments of this application, terms such as "first" and "second" may be used to distinguish between technical features that have same or similar functions. The terms such as "first" and "second" do not limit a quantity and an execution sequence, and the terms such as "first" and "second" do not indicate a definite difference. In embodiments of this application, a term such as "example" or "for example" is used to represent an example, an illustration, or a description. Any embodiment or design scheme described with "example" or "for example" should not be explained as being more preferred or having more advantages than another embodiment or design scheme. Use of the term such as "example" or "for example" is intended to present a related concept in a specific manner for ease of understanding.

In addition, to better describe this application, specific details are given in the following specific implementations. A person skilled in the art should understand that this application can also be implemented without some specific details. In some examples, methods, means, elements, and circuits that are well-known to a person skilled in the art are not described in detail, so that a subject matter of this application is highlighted.

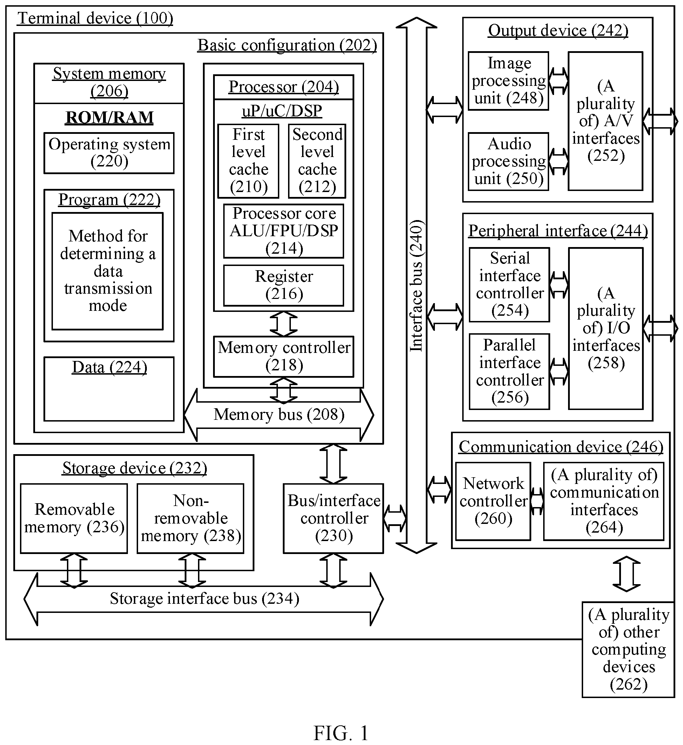

The method for determining a data transmission mode provided in embodiments of this application may be implemented by a terminal device that has a data processing capability, such as a smartphone, a laptop computer, a tablet computer, or a wearable device. In an example, the terminal device may use a structure shown in FIG. 1.

FIG. 1 is a block diagram of a terminal device 100 according to an embodiment of this application. The terminal device 100 typically includes a system memory 206 and one or more processors 204. A memory bus 208 may be used for communication between the processor 204 and the system memory 206.

Depending on desired configuration, the processor 204 may be any type of processor, including but not limited to a microprocessor (µP), a microcontroller (µC), a digital signal processor (DSP), or any combination thereof. The processor 204 may include one or more levels of caches, such as a first level cache 210 and a second level cache 212, a processor core 214, and a register 216. The example processor core 214 may include an arithmetic logic unit (ALU), a floating point unit (FPU), a digital signal processing core (DSP core), or any combination thereof. The example memory controller 218 may be used with the processor 204, or in some implementations, the memory controller 218 may be an internal part of the processor 204.

Depending on the desired configuration, the system memory 206 may be any type of memory, including but not limited to a volatile memory (such as a RAM), a non-volatile memory (such as a ROM or a flash memory), or any combination thereof. The system memory 206 may include an operating system 220, one or more programs 222, and program data 224. In some implementations, the program 222 may be arranged to execute instructions on the operating system by the one or more processors 204 using the program data 224.

As shown in FIG. 1, a type of a storage device 232 is not limited in this application. For example, the storage device 232 may be a storage area network device, or may be a storage device including a file system, for example, a network attached storage (Network Attached Storage NAS) device.

In addition, the storage device 232 may include a removable memory 236 and a non-removable memory 238. A storage unit mentioned in this application indicates storage space distributed on a hard disk that is used as a non-removable memory. The hard disk may indicate a plurality of types of hard disks, for example, a solid state drive (Solid State Drive, SSD), a serial attached SCSI (Serial Attached SCSI, SAS), or a fiber channel (Fiber Channel, FC) hard disk drive (Hard Disk Drive, HDD), where the SCSI (Small Computer System Interface) is a minicomputer system interface, and the like.

In an example, when the storage device 232 is a SAN device, the storage unit may indicate a segment of logical storage space distributed on the hard disk, that is, a logic unit (Logic Unit, LU), and a logic unit number (Logic Unit Number, LUN) is used to identify the logic unit, where the logic unit may be addressed by using the SCSI. In an implementation, the storage device may partition a physical hard disk, and each partition may be used as a storage unit that has a logical address (that is, a LUN) for a host to access.

The terminal device 100 may further include an interface bus 240 that facilitates communication from various interface devices (for example, an output device 242, a peripheral interface 244, and a communication device 246) to base configuration via a bus/interface controller 230. An example output device 242 includes an image processing unit 248 and an audio processing unit 250. The image processing unit 248 and the audio processing unit 250 may be configured to facilitate communication with various external devices such as a display or a speaker via one or more A/V interfaces 252.

In addition, the shown output device 242 may further include a camera lens, and the camera lens (as a front-facing camera lens, or as a rear-facing camera lens) may be configured to capture a still image or a video. Usually, the camera lens may include a photosensitive element such as a lens group and an image sensor. The lens group includes a plurality of lenses (convex lenses or concave lenses), and is configured to: collect an optical signal reflected by a to-be-photographed object, and transfer the collected optical signal to the image sensor.

Specifically, a function of the lens group is to present a light image of an observed target on a sensor of a camera, which may also be referred to as optical imaging. The lens group combines optical parts (mirror reflector, transmission mirror and prism) of various shapes and different media (plastic, glass or crystal) in a specific manner, so that after being transmitted or reflected by these optical parts, light is received by a receiving component based on a transmission direction of the light changed based on a requirement of people, to complete an optical imaging process of an object. Generally, each lens group includes a plurality of groups of lenses with curvature of different curved surfaces at different intervals. A focal length of a lens is determined by indexes such as the interval, curvature of the lens, and light-transmission coefficient. The main parameter indexes of the lens group include effective focal length, aperture, maximum image plane, field of view, distortion, and relative illumination. Values of these indexes determine the comprehensive performance of the lens.

The image sensor generates an original image of the to-be-photographed object based on the optical signal. Specifically, the image sensor may be a component that converts an optical image into an electronic signal, and is widely applied to a digital camera and another electronic optical device. Common sensors include: a charge-coupled device (charge-coupled device, CCD) and a complementary metal-oxide-semiconductor (complementary MOS, CMOS). Both the CCD and the CMOS have a large quantity (for example, tens of millions) of photodiodes (photodiodes). Each photodiode is referred to as a photosensitive primitive, and each photosensitive primitive corresponds to a pixel. During exposure, after receiving light, the photodiodes convert the optical signal into an electrical signal that includes brightness (or brightness and color). Therefore, an image is reconstructed accordingly. A Bayer (Bayer) array is a common image sensor technology and can be applied to the CCD and the CMOS. The Bayer array uses the Bayer color filter to start different pixels to sense only one of red, blue and green light. These pixels are interleaved together, and then the original image is restored through demosaicing interpolation. The Bayer array may be applied to the CCD or the CMOS, and a sensor to which the Bayer array is applied is also referred to as a Bayer sensor. In addition to the Bayer sensor, there are also sensor technologies such as an X3 (developed by Foveon), and the like. The X3 technology uses three layers of photosensitive elements, and each layer records one color channel of RGB. Therefore, image sensors with all colors can be captured on one pixel.

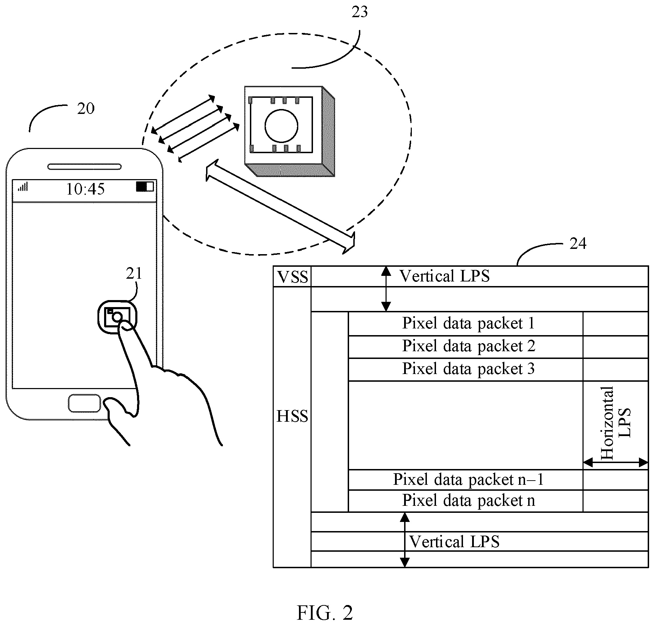

The output device 242 may be a display, and the display is configured to display an image, a video, and the like. The display includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light emitting diode (quantum dot light-emitting diode, QLED), and the like. In some embodiments, the display may include one or N displays, where N is a positive integer greater than 1. The display may be configured to display information input by a user or information provided to the user, and various graphical user interfaces (graphical user interfaces, GUIs). For example, the display may display a photo, a video, a web page, a file, or the like. For another example, the display may display a graphical user interface. The graphical user interface includes a status bar, a collapsible navigation bar, a time and weather widget (widget), and an application icon, for example, a browser icon, and the like. The status bar includes an operator name (for example, China Mobile), a mobile network (for example, 4G), time, and a remaining battery level. The navigation bar includes an icon of a back (back) button, an icon of a home (home) button, and an icon of a forward button. In addition, it may be understood that, in some embodiments, the status bar may further include a Bluetooth icon, a Wi-Fi icon, an icon of an externally-connected device, and the like. It may be further understood that, in some other embodiments, the graphical user interface may further include a dock bar, and the dock bar may include an icon of a frequently-used application, and the like. After the processor 204 detects a touch event of the user on an application icon by using a finger (a stylus or the like), in response to the touch event, the processor 204 starts a user interface of an application corresponding to the application icon, and displays the user interface of the application on the display. Corresponding to embodiments of this application, the processor 204 may detect that a finger of the user touches the application icon 21 shown in FIG. 2, and display an image shot by the camera lens on the display.

In embodiments of this application, the display may be one integrated flexible display, or may be a spliced display including two rigid screens and one flexible screen located between the two rigid screens.

The example peripheral interface 244 may include a serial interface controller 254 and a parallel interface controller 256. The serial interface controller 254 and the parallel interface controller 256 may be configured to facilitate communication via one or more I/O interfaces 258 and an external device such as an input device (for example, a keyboard, a mouse, a pen, a voice input device, or a touch input device) or another peripheral device (for example, a printer or a scanner). The example communication device 246 may include a network controller 260, and the network controller 260 may be arranged to facilitate communication between one or more communication interfaces 264 and one or more other computing devices 262 via a network communication link.

The network communication link may be an example of a communication medium. The communication medium may usually be embodied as computer-readable instructions, a data structure, or a program module in a modulated data signal such as a carrier or another transmission mechanism, and may include any information delivery medium. The "modulated data signal" may be such a signal that one or more of data sets thereof or changes thereof may be made in a manner of encoding information in the signal. In a non-limiting example, the communication medium may include a wired medium such as a wired network or a private line network, and various wireless media such as a sound, a radio frequency (RF), a microwave, an infrared (IR), or another wireless medium. The term computer-readable medium used herein may include both a storage medium and a communication medium.

The terminal device 100 may be implemented as a server, for example, a file server, a database server, an application server and a web server, or may be implemented as a part of a small-sized portable (or mobile) electronic device. The electronic device may be a cellular phone, a personal digital assistant (PDA), a personal media player device, a wireless network browsing device, a personal head wearable device, an application-specific device, or a hybrid device that may include any of the foregoing functions. The terminal device 100 may further be implemented as a personal computer configured to include a desktop computer and a notebook computer.

It should be understood that, in actual application, the terminal device 100 may include more or fewer components than those shown in FIG. 1. This is not limited in embodiments of this application. The terminal device 100 shown in the figure is merely an example, and the terminal device 100 may have more or fewer components than those shown in the figure, two or more components may be combined, or different component configurations may be used. Various components shown in the figure may be implemented in hardware including one or more signal processing and/or application-specific integrated circuits, software, or a combination of hardware and software.

The interface described in embodiments of this application may be an interface that has different data transmission modes. The different data transmission modes may be classified based on power consumed for data transmission, for example, a low-power data transmission mode or a high-power data transmission mode. The different data transmission modes may alternatively be classified based on an amount of data transmitted per unit time, for example, a high-speed data transmission mode or a low-speed data transmission mode. The different data transmission modes may also be classified based on whether data transmission is performed, for example, a data transmission mode or a sleep mode. This is not limited herein.

In an example, a data transmission interface (for example, a high-speed interface) may include a high-speed (high-speed, HS) data transmission mode and a low-power (low-power, LP) data transmission mode, where a data transmission rate in the HS data transmission mode is higher than a data transmission rate of the LP data transmission mode. In the HS data transmission mode, the data transmission rate is high (usually in a range of 80 Mbps to 1 Gbps), power consumption is high and a signal amplitude is small (usually in a range of 100 mv to 300 mv). The LP data transmission mode includes a sleep mode. In the LP data transmission mode, the data transmission rate is low (for example, less than 10 Mbps), power consumption is low, and a signal amplitude is large (for example, 1.2 V). In addition, there is a switching mechanism between the two data transmission modes. The switching mechanism is described in detail below, and details are not described herein again.

Refer to FIG. 1. The interface described in embodiments of this application may be an interface that has different data transmission modes, such as an A/V interface 252, a peripheral interface 244 or an I/O interface 258. To better explain this application, the following uses a camera serial interface (Camera Serial Interface, CSI) as an example to describe a scenario to which this application can be applied. A MIPI (Mobile Industry Processor Interface) Alliance defines three physical layer standards for an interface physical layer (Physical Layer, PHY): C-PHY, D-PHY, and M-PHY. The CSI in FIG. 1 may use the C-PHY and the D-PHY

For ease of description, the following describes an application scenario of embodiments of this application by using a camera interface as an example with reference to FIG. 2. Refer to FIG. 1 and FIG. 2. The user starts a camera application by tapping a camera control 21 displayed on a terminal device 20. Then, the camera application 21 may notify, by using the interface bus 240, a camera interface 23 corresponding to the camera application to shot an image, and transmit the shot image to the processor 204 or the image processing unit 248 by using the communication link (for example, the interface bus 240). In a transmission process, the camera interface 23 may send pixel information or an operation command in an image to the processor 204 or the image processing unit 248 in a serial manner by using a data bus. In the transmission process, the camera interface 23 may transmit data packets by using an independent communication protocol. The communication protocol may include a format of the transmitted data packet and an error correction and detection mechanism. After the processor 204 or the image processing unit 248 processes the image, the image is transmitted to the A/V interface (for example, a display) by using the communication link. Similarly, the processor 204 or the image processing unit 248 may send processed pixel information or operation command to the A/V interface (for example, the display) in a serial manner by using the data bus. In the transmission process, the processor 204 or the image processing unit 248 may transmit the data packets by using a communication protocol the same as that described above.

In an example, the image shot by the camera interface 23 may be transmitted to a display interface by using the communication link in a manner in Table 24. Before data transmission is performed, the camera interface 23 may determine a vertical sync start (vertical sync start, VSS) time point based on an initial setting or a setting of a skilled person. A time period between two VSS time points can indicate time at which the image is displayed. Therefore, the VSS can be used to control a frame rate (to be specific, a quantity of frames of the image displayed per second).

As shown in FIG. 2, a horizontal sync start (horizontal sync start, HSS) time point may be entered after the VSS time point. After the HSS time point, the camera interface 23 may send pixel data packets in each row of the image row by row. It may be obviously learned from Table 24 of FIG. 2 that the camera interface 23 does not send data after the VSS time point and before the HSS time point. In other words, in a time period between a data packet at the VSS time point and a data packet at the HSS time point, no data packet is transmitted on the communication link. Therefore, the camera interface 23, the communication link and a receiving end interface (the display interface) may enter a low-power state (low-power state, LPS).

After the HSS time point, the pixel data packets may be sent row by row based on a preset time interval, where the preset time interval may be calculated by using a display frame rate and resolution, and is usually in a microsecond level. Within the preset time interval, if pixel data packets in a row are sent, no data packet is sent on the communication link by the camera interface 23. Therefore, the camera 21 may enter a horizontal LPS. In addition, after the data packets are sent row by row, the camera interface 23 enters a vertical LPS.

For example, when the frame rate is 60 Hz, display time of a frame of image is 1/60≈16.67 milliseconds. When the resolution is 1920*1080, because vertical blank and horizontal blank exist, and an actual pixel is 2400*1200, time of pixel packets in each row shown in FIG. 2 is approximately 16.67/1200≈13.89 µs. Limited by interface performance and a related protocol, data transmission time of the pixel packets is about 12 microseconds. Therefore, the horizontal LPS is about 1.8 microseconds, and the vertical LPS is about 1.67 milliseconds.

It can be learned that, when the frame rate and the resolution are fixed, sleep time between data packets is fixed. In other words, intra-frame sleep time is fixed. However, when the frame rate or the resolution changes, the sleep time changes accordingly. As described above, both the vertical LPS and the horizontal LPS change accordingly. In this case, the vertical LPS and the horizontal LPS may be determined jointly based on the frame rate, the resolution, a data packet length, the interface performance and the related protocol.

To reduce power consumed by the camera interface 23 (referred to as power consumption for short below), the camera interface 23, the communication link and/or the receiving end interface (for example, the display interface) may enter the LPS within the time period in which no data packet is transmitted, and the camera interface 23 may enter the HS data transmission mode within a time period in which a data packet needs to be transmitted.

It should be noted that the foregoing application scenario described in embodiments of this application is intended to describe the technical solutions in embodiments of this application more clearly, and does not constitute a limitation on the technical solutions provided in embodiments of this application. A person of ordinary skill in the art may know that, for emergence of another similar or new application scenario, the technical solutions provided in embodiments of this application are also applicable to a similar technical problem.

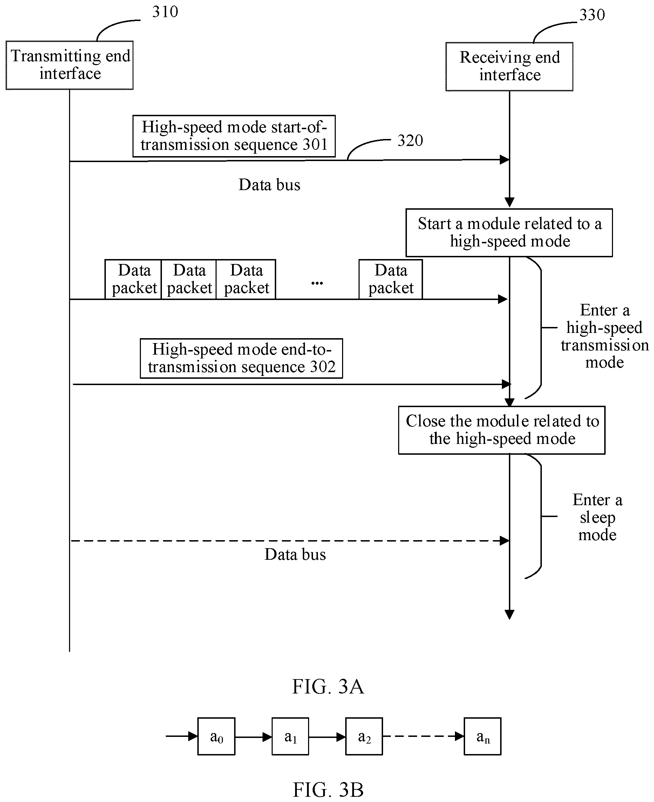

FIG. 3A is a diagram of switching a data transmission mode by a data transmission system in a related technology. The data transmission system may include a transmitting end interface 310, a data link 320 and a receiving end interface 330. The transmitting end interface 310 may indicate an interface for sending a data packet. The receiving end interface 330 may indicate an interface for receiving a data packet from the transmitting end interface. The communication link 320 may indicate a data transmission channel for sending the data packet transmitted by the transmitting end interface 310 to the receiving end interface. The communication link 320 may be implemented in a wireless form or in a wired form.

In a possible implementation, the transmitting end interface 310 and the receiving end interface 330 may indicate components in a same device. The components mentioned herein may be in a form of a chip, or may be in a form of a device. This is not limited in this application. For example, both the transmitting end interface 310 and the receiving end interface 330 may be located at an interface in the terminal device 100 in FIG. 1, for example, the A/V interface, the peripheral interface, or the I/O interface. In this scenario, the data link 320 may indicate the data bus in FIG. 1.

In addition, the transmitting end interface 310 and the receiving end interface may further indicate components that are not in a same device. For example, when the transmitting end interface 310 may be the interface in the terminal device 100 in FIG. 1, the receiving end interface 320 may be located in an external interface device of the terminal device 100. For example, the external interface device may include an external display device, an external camera device, and the like. In this scenario, the communication link 320 may be implemented by using a cable, an optical fiber, or another communication channel.

In this example, the transmitting end interface 310 and the receiving end interface 320 are C/D-PHY high-speed interfaces in the terminal device 100. To ensure that the C/D-PHY high-speed interfaces can switch between different data transmission modes, the interface may use an operation shown in FIG. 3A.

As shown in FIG. 3A, when no data packet is transmitted, the transmitting end interface 310, the communication link 320 and the receiving end interface 330 are all in a sleep mode. After a period of time, the transmitting end interface 310 needs to send the data packet to the receiving end interface 330 by using the communication link 320. In this case, the transmitting end interface 310, the communication link 320 and the receiving end interface 330 need to end the sleep mode and start a high-speed data transmission mode to send the data packet. In other words, the data transmission mode of the transmitting end interface 310 needs to be switched from the sleep mode to the high-speed data transmission mode. Correspondingly, the communication link 320 and the receiving end interface 330 also need to switch the data transmission modes accordingly.

In this scenario, in a related technology, the transmitting end interface 310 may send a high-speed mode start-of-transmission (start-of-transmission, SoT) sequence 301 to the receiving end interface 330 by using the communication link 320.

After receiving the SoT 301, the communication link 320 and the receiving end interface 330 may end the sleep mode. Specifically, after receiving the SoT 301, the communication link 320 may start the high-speed data transmission mode by changing an endpoint connection relationship of some circuits in the communication link. For example, to start the high-speed data transmission mode, the communication link 320 may switch some circuits from a high-impedance state to a 50-ohm endpoint-connected state. In addition, the receiving end interface 320 may start related modules for high-speed data transmission in the receiving end interface 320, for example, a clock data recovery (CDR) module, a logic control module, a data parsing module, a K code detection module, a serial/parallel detection module, a scrambling code detection module, and a spread spectrum module. In other words, after the transmitting end interface 310 sends the SoT for a period of time, both the communication link 320 and the receiving end interface 330 are prepared to execute in the high-speed data transmission mode. In this case, the transmitting end interface 310 may send the data packet to the receiving end interface 330 in the high-speed data transmission mode by using the communication link 320.

After a period of time, the transmitting end interface 310 has complete sending of the data packet to the receiving end interface 330. In other words, the transmitting end interface 310 does not send the data packet to the receiving end interface 330. In this case, the transmitting end interface 310 may send a high-speed mode end-to-transmission (end-to-transmission, EoT) sequence 302 to the receiving end interface 330 by using the communication link 320 after completing an operation of sending a data packet, so that the communication link 320 and the receiving end interface 330 enter the sleep mode. In the sleep mode, the transmitting end interface 310 and the receiving end interface 330 may close the related module used for high-speed data transmission. However, both the transmitting end interface and the communication link need to be prepared to generate and receive the SoT. Therefore, some circuits in the transmitting end interface need to be reserved.

As shown in FIG. 3B, the transmitting end interface may use a shift register output circuit in a fixed state as some circuits, to generate and send the SoT, where a₀, a₁, to aₙ may indicate values of shift registers. For example, when the EoT is 110, a₂ may be set to 1, a₁ may be set to 1, and a₀ may be set to 0.

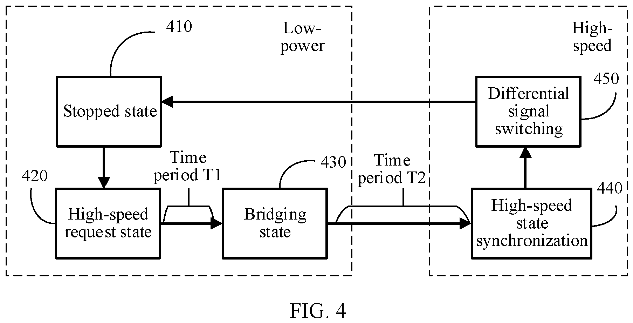

To better understand the technical solutions in FIG. 3A and FIG. 3B, the following describes changes of interfaces and the communication link during the switching between data transmission modes with reference to FIG. 4. For ease of description, in the embodiment in FIG. 4, the transmitting end interface needs to send data when the transmitting end interface is in a low-power data transmission mode. Therefore, the transmitting end interface is switched from the low-power data transmission mode to the high-speed data transmission mode.

As shown in FIG. 4, when no data packet is transmitted, the transmitting end interface is in the low-power data transmission mode. In this mode, the related modules used for high-speed data transmission in the transmitting end interface and the receiving end interface are all closed, and the communication link is also in a stopped state.

When the transmitting end interface needs to transmit data, the transmitting end interface ends the low-power data transmission mode, and enters the high-speed data transmission mode. Specifically, the transmitting end interface may send the SoT before sending the data packet. After receiving the SoT, the communication link ends the stopped state 410, and enters a high-speed request state 420. After a time period T1, the communication link enters a bridging state 430. In other words, the communication link has changed the endpoint connection relationship of some circuits. In a time period T2, the receiving end interface detects the bridging state 430 of the communication link and starts the related module used for high-speed data transmission. Therefore, after the time period T2, the transmitting end interface and the receiving end interface may achieve high-speed state synchronization 440 between the two ends. In other words, after the bridging state 430 of the communication link lasts for the time period T2, both ends that send data and receive data have entered the high-speed data transmission mode. The data transmission modes of the transmitting end interface, the communication link and the receiving end interface are switched from the low-power data transmission mode to the high-speed data transmission mode.

After data transmission is completed, the transmitting end interface may send the EoT, so that the communication link enters the stopped state 410. In an implementation, the communication link may enter the stopped state 410 after detecting differential signal switching 450. Specifically, the communication link transmits the EOT after transmitting the last data packet. Therefore, the communication link may detect that a data format of the transmitted data changes, that is, a data packet format of a differential signal is changed to an instruction format of the shift register. In other words, the communication link detects the differential signal switching 450. After a period of time, the communication link may parse out EOT instructions, and the communication link may enter the stopped state 410. The period of time mentioned herein may indicate that time for parsing out the EOT by the communication link is reserved, where the time is at a nanosecond level, and is related to a data transmission rate of the communication link and a parsing capability of a receiving end. After receiving that the communication link exits the high-speed data transmission mode, the receiving end interface may enter a low-power state. In the low-power state, the receiving end interface may close the related module used for high-speed data transmission.

It may be learned that, in the related technology, specific high-speed transmission start instructions and specific high-speed transmission end instructions are used to notify the data link and the receiving end interface to enter different data transmission modes. These instructions are of a specific length and therefore may cause errors. In addition, after these instructions are received, both the communication link and the receiving end interface need time to start and run a related circuit or module. In other words, the communication link and the receiving end interface need additional start/preparation time. In addition, even in the low-power data transmission mode (for example, the sleep mode), the communication link still needs to reserve some circuits to receive the start-of-transmission sequence in the high-speed data transmission mode. This limits a possibility of further reducing power consumption of the communication link.

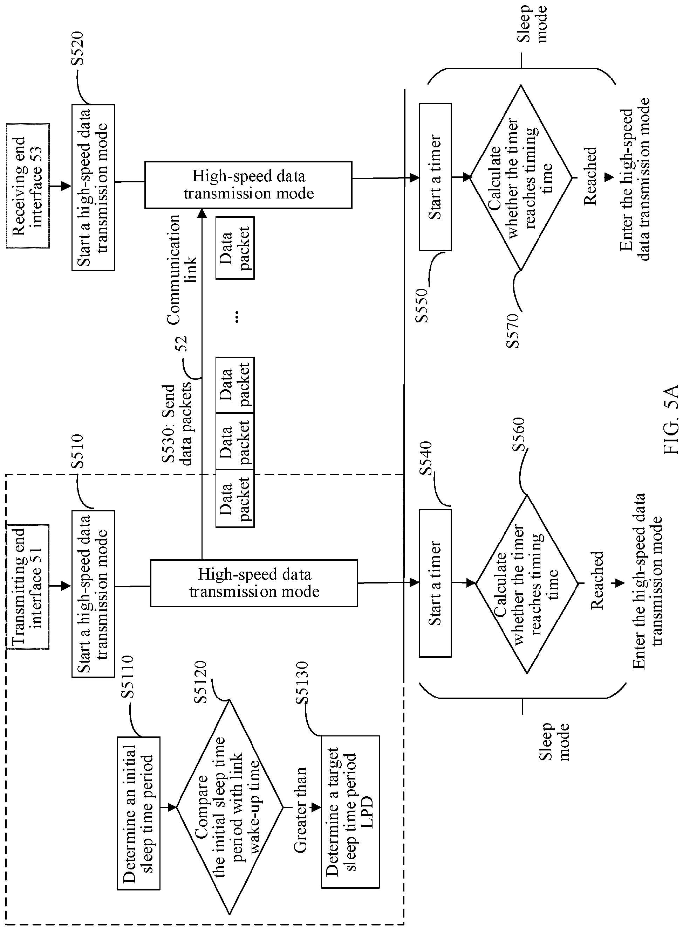

FIG. 5A is a flowchart of steps of a method for determining a data transmission mode according to an embodiment of this application. For ease of description, in this embodiment, a transmitting end interface 51, a communication link 52, and a receiving end interface 53 have two modes: a low-power data transmission mode and a high-speed data transmission mode. For ease of description, the transmitting end interface 51 and the receiving end interface 53 are camera interfaces in a terminal device 100, and the camera interfaces are C/D-PHY high-speed interfaces.

In an implementation, a user may trigger a related control in the terminal device 100 to start the transmitting end interface 51. For example, the user may tap a camera icon on the terminal device 100. After detecting the tapping of the user, the terminal device 100 may invoke a kernel layer to start the camera interface and an A/V interface. The camera interface may be used as the transmitting end interface 51, and the A/V interface that displays an image shot by the camera interface 51 may be used as the receiving end interface 53.

In step S510, the transmitting end interface 51 starts the high-speed data transmission mode, and in step S520, the receiving end interface 53 starts the high-speed data transmission mode. In the high-speed data transmission mode, a data transmission rate is high (usually in a range of 80 Mbps to 1 Gbps), power consumption is high and a signal amplitude is small (usually in a range of 100 mv to 300 mv).

In a possible implementation, the transmitting end interface 51 and the receiving end interface 53 may be set by default to start the high-speed data transmission mode after being started. In another possible implementation, the terminal device 100 may send start instructions that are used to start the high-speed data transmission mode to the transmitting end interface 51 and the receiving end interface 53 by using another data interface. The transmitting end interface 51 and the receiving end interface 53 may start the high-speed data transmission mode after receiving the instructions.

To ensure that the transmitting end interface 51, the receiving end interface 53 and the communication link 52 are prepared to execute the high-speed data transmission mode, the transmitting end interface 51 may transmit a data packet after being started for a period of time (for example, 3 microseconds). The following specifically describes an operation performed after the transmitting end interface 51 starts to send the data packet with reference to FIG. 5A.

As shown in FIG. 5A, after starting the high-speed data transmission mode, the transmitting end interface 51 may send the data packet to the receiving end interface 53 by using the communication link 52 in step S530. When the transmitting end interface 51 sends the data packet in the high-speed data transmission mode, a transmitting end device 51 further needs to determine whether the transmitting end interface 51 executes a sleep mode.

Specifically, when a resolution and a frame rate are fixed, a quantity of data packets transmitted in each frame and sleep time after the data packet is transmitted are basically fixed. Therefore, the transmitting end interface 51 may determine the sleep time in advance. Based on this, the transmitting end interface 51 may determine an initial sleep time period (low power duration, LPD) in which the sleep mode is to be executed, and the initial sleep time period may also be referred to as an initial time period. In other words, the transmitting end interface 51 may perform step S5110 to determine the initial LPD for executing the sleep mode. Refer to the embodiment in FIG. 2. It may be learned that the transmitting end interface 51 may set a time period corresponding to a horizontal LPS as the initial LPD, or may set a time period corresponding to a vertical LPS as the initial LPD. It should be noted that, because the frame rate or the resolution in the terminal device may change accordingly, the time periods corresponding to the horizontal LPS and the vertical LPS also changes accordingly. In this case, the initial LPD determined by the transmitting end interface 51 also changes accordingly.

In step S5220, the transmitting end interface 51 compares the initial LPD with communication link wake-up time. The communication link wake-up time indicates link wake-up time inherent in the terminal device, and is time required for waking up a link. This is related to circuit design and wake-up logic of the terminal device, and is determined before the terminal device is delivered from a factory and cannot be randomly changed. In other words, the communication link wake-up time is determined. In an implementation, a value of the communication link wake-up time may be stored in a related memory (for example, a register) of the transmitting end interface.

Therefore, to ensure that the communication link has sufficient time to switch to the high-speed data transmission mode, the time period needs to be reserved. Therefore, after determining the initial LPD, the transmitting end interface may compare the initial LPD with the communication link wake-up time. If the initial LPD is less than the communication link wake-up time, in other words, time for the communication link 52 and the receiving end interface 53 to enter the sleep mode is not enough to wake up the communication link, the transmitting end interface does not execute the sleep mode, in other words, the transmitting end interface 51 does not perform an additional operation, and continues to remain in the high-speed data transmission mode. For example, because the horizontal LPS is less than the communication link wake-up time, the transmitting end interface may continue to remain in the high-speed data transmission mode.

If it is determined in step S5120 that the initial LPD is greater than the communication link wake-up time, the transmitting end interface 51 is determined to perform switching of a data transmission mode. In this case, the transmitting end interface 51 may perform step S530. For example, because the vertical LPS is greater than the communication link wake-up time, the transmitting end interface 51 may perform step S530.

In step S5130, a target LPD to execute the sleep mode is determined by using the initial LPD and the link wake-up time, where the target LPD may also be referred to as a target time period. In an implementation, to ensure that the communication link 52 changes a terminal connection relationship to enter the high-speed data transmission mode and the receiving end interface 53 starts a related circuit in the high-speed data transmission mode in time, the target LPD may be determined as the initial sleep time period minus the link wake-up time. In addition, the target LPD may be appropriately shortened to reserve sufficient time for waking up the communication link. In other words, the target LPD may be set to be not longer than remaining time period obtained by subtracting the link wake-up time from the initial LPD. When the target LPD is determined in step S5130, the transmitting end interface 51 needs to send the target LPD to the receiving end interface 53.

In a possible implementation, after obtaining the initial LPD and the link wake-up time, the receiving end interface 53 may perform step S5110 to step S5130, in other words, the receiving end interface 53 determines the target LPD. In this case, the receiving end interface 53 may determine the initial LPD and the link wake-up time based on the frame rate, the resolution, and the like, and then perform step S5110 to step S5130.

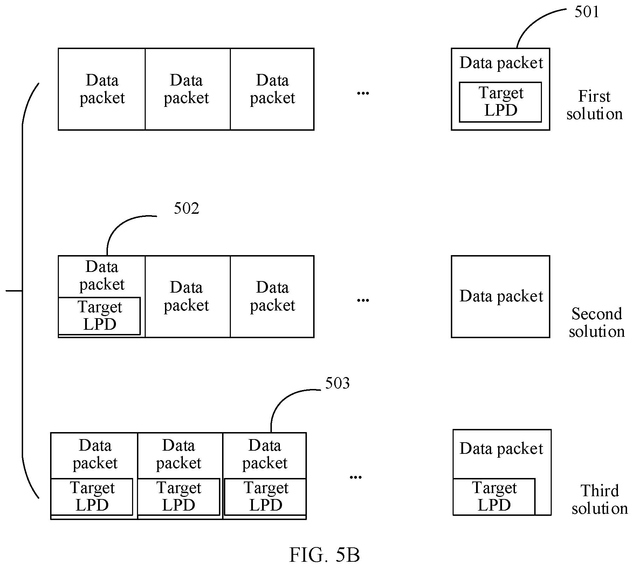

When the transmitting end interface 51 determines the target LPD, the transmitting end interface 51 may send the target LPD to the receiving end interface by using the data packet, as shown in FIG. 5B.

FIG. 5B is a diagram of transmitting a target LPD by using data packets according to an embodiment of this application. In the figure, a transmitting end interface 51 may send the target LPD to a receiving end interface 53 by using three solutions. It should be noted that all the data packets sent in step S530 include a packet header (packet header, PH), a payload (payload, PL), and a packet footer (packet footer, PF). The PH may include information related to transmission of the data packets, for example, a data type and a data length. The PL is transmitted data (for example, pixel information in the pixel data packet mentioned above). The PF may include check information and end information.

Three solutions for transmitting the target LPD by using the data packets are specifically as follows:

First solution: The target LPD is included in an initial data packet (or referred to as a first data packet) 501, and the target LPD may be placed in any part (a packet header part, a payload part or a packet footer part) of the data packet. Other data packets except the first data packet 501 transmit data (for example, transmitting pixel data) based on a data packet format in a related technology. The first data packet 501 indicates the first data packet in the data packets sent from the transmitting end interface 51 to the receiving end interface 53 in step S530.

Second solution: The data packet transmitted in a high-speed data transmission mode transmits data based on the data packet format in the related technology, but a last data packet 502 in the high-speed data transmission mode includes the target LPD, and the target LPD may be placed in any part (the packet header part, the payload part, or the packet footer part) of the data packet. The last data packet 502 indicates the last data packet in the data packets sent from the transmitting end interface 51 to the receiving end interface 53 in step S530. After the last data packet 530 is sent, the transmitting end interface 51 switches from the high-speed data transmission mode to a sleep mode.

Third solution: The data packets transmitted by the transmitting end interface 51 and the receiving end interface all includes the target LPD that indicates whether to enter the sleep mode after a current data packet. For ease of description, a data packet 503 in FIG. 5B may indicate any data packet transmitted in the third solution. For example, if the transmitting end interface 51 continues to send the data packet after sending the current data packet, the target LPD of the current data packet is 0, until the last data packet may include a specific target LPD (for example, 5 microseconds), and the target LPD may be placed in any part (the packet header part, the payload part or the packet footer part) of the data packet.

The target LPD mentioned in the foregoing three solutions may be placed in the packet header, the payload and the packet footer. Storing data (in other words, the target LPD) by using the payload of the data packet is a common manner in a related field, and details are not described herein again.

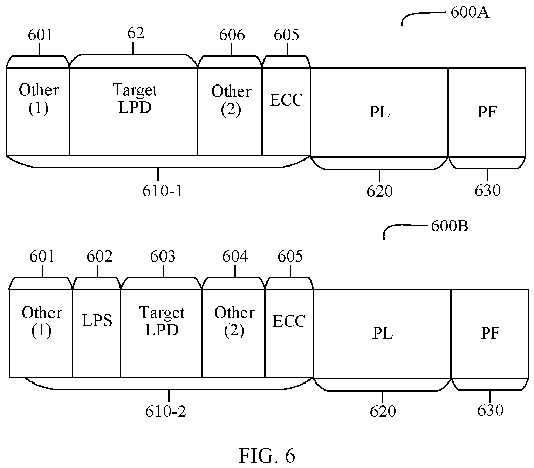

The following describes in detail a solution of transmitting the target LPD by using the packet header with reference to FIG. 6. A manner of transmitting the target LPD by using the packet footer is similar to that of transmitting the target LPD by using the packet header, and details are not described herein again.

When the target LPD is transmitted by using the packet header, the first data packet 501, the last data packet 502 or the data packet 503 may all use a data packet format shown in FIG. 6. In other words, when the transmitting end interface 51 transmits the data packet in the high-speed data transmission mode (for example, during performing of step S5110 to step S5130), the first data packet 501 may use the data packet in FIG. 6, in other words, the target LPD is embedded in the packet header, and the target LPD is not embedded in the packet header of another data packet; or the last data packet 502 may use the data packet in FIG. 6, in other words, the target LPD is embedded in the packet header, and the target LPD is not embedded in the packet header of another data packet. Alternatively, the data packet in FIG. 6 is used for all data packets, in other words, the target LPD is embedded in the packet header. The following describes the solution in detail with reference to FIG. 6, and details are not described herein again.

The transmitting end interface 51 may start a timer in step S540 after a starting condition of the timer is met, where the timer is timed for the target LPD. The starting condition may indicate a switching condition for the transmitting end interface 51 to switch from the high-speed data transmission mode to the sleep mode.

In a possible implementation, the starting condition includes a quantity of data packets. Specifically, when the resolution and the frame rate are fixed, the transmitting end interface 51 may determine a quantity of data (for example, a quantity of data packets) transmitted in the high-speed data transmission mode. Therefore, the timer may be started after a specific quantity of data packets are transmitted. Particularly, for a solution in which the first data packet 501 includes the target LPD, the transmitting end interface 51 may start the timer after sending a quantity of data packets that is determined by using the resolution and the frame rate. In another possible implementation, the starting condition may include that the transmitting end interface 51 starts to switch to the sleep mode after the last data packet is sent. Therefore, the timer may be started.

In step S550, the receiving end interface 53 starts the timer, where the timer is timed for the target LPD. In an implementation, the receiving end interface 53 may start a timer after receiving the last data packet. The starting condition may indicate a switching condition for the receiving end interface 53 to switch from the high-speed data transmission mode to the sleep mode.

When the first data packet is used to send the target LPD, the receiving end interface 53 may determine the last data packet by using an end flag bit in the last data packet. In addition, in a possible implementation, the starting condition includes the quantity of data packets. The receiving end interface 53 may determine the quantity of data packets transmitted in the high-speed data transmission mode and determine the last data packet based on the quantity. Finally, the receiving end interface 53 may start the timer after receiving the last data packet.

In an optional implementation, when the target LPD is sent by using the first data packet, the transmitting end interface 51 and the receiving end interface 53 may further start the timer after sending the first data packet. In this case, timing time of the timers of the transmitting end interface 51 and the receiving end interface 53 is set to a sum of time for performing in the high-speed data transmission mode and time of the target LPD.

In addition, in another possible implementation, the starting condition may include that the last data packet is completely sent. When the target LPD is sent by using the last data packet 502, after sending the last data packet 502, the transmitting end interface 51 may perform step S540 to start the timer. In addition, after receiving the last data packet 502, the receiving end interface 53 may perform step S550 to start the timer. In an implementation, each timer in the transmitting end interface 51 and the receiving end interface 53 is timed for the target LPD.

When the third solution mentioned above is used, the transmitting end interface 51 may perform step S540 after sending the last data packet, to start the timer. After the transmitting end interface 51 sends the last data packet to the receiving end interface 53, the receiving end interface 53 may perform step S550 to start the timer. In an implementation, each timer in the transmitting end interface 51 and the receiving end interface 53 is timed for the target LPD.

In step S560, the transmitting end interface 51 may calculate whether the timer reaches the timing time, and after the timer reaches the timing time, a related module for high-speed data transmission in the transmitting end interface 51 is started, to enter the high-speed data transmission mode.

In addition, in step S570, the receiving end interface 53 may calculate whether the timer reaches the timing time, and after the timer reaches the timing time, a related module for high-speed data transmission in the receiving end interface 51 is started, to enter the high-speed data transmission mode.

In conclusion, embodiments of this application provide a method for determining the data transmission mode. In the method, after determining a target sleep time period, the transmitting end interface may send the target sleep time period to the receiving end interface by using the data packet, and a long sequence does not need to be used to start or end the data transmission mode, so that an error rate of the long sequence is avoided. Further, in the method, the timer and the timing time are set in sending of the transmitting end interface and the receiving end interface. This helps the transmitting end interface, the communication link and the receiving end interface to complete preparation work for high-speed data transmission in advance, effectively saves preparation time required for the receive end to enter the high-speed transmission mode during sequence transmission, implements quick exit from the sleep mode, and improves transmission efficiency.

FIG. 6 shows two types of data packets 600A and 600B in an embodiment of this application. The data packet 600A and the data packet 600B are data packets formed by a transmitting end interface based on a corresponding protocol layer. In the three solutions shown in FIG. 5B, a first data packet 501, a last data packet 502 and a data packet 503 that are sent by the transmitting end interface all use a data packet format of the data packet 600A.

As shown in FIG. 6, both the data packet 600A and the data packet 600B include a packet header (packet head, PH) 610-1 or 610-2, a payload (payload, PL) 620 and a packet footer (packet footer, PF) 630. The PH 610-1 or the 610-2 may include information related to transmission of the data packet, for example, a data type and a data length. The PL is transmitted data (for example, pixel data in the pixel data packet mentioned above). The PF may include check information and end information.

In the data packet 600A or 600B, the PH 610-1 or the PH 610-2 may include a plurality of data bits (bits). These data bits are flag bits that indicate different content. In the PH 610-1:

The data bit 601 may be a flag bit that indicates another function unrelated to a data transmission mode in this embodiment of this application, for example, a flag bit that may indicate the data type, a flag bit that may indicate a virtual channel, a flag bit that may indicate the data length, a flag bit that may indicate the check information, or a flag bit that may indicate synchronization. In this embodiment, one data bit may be allocated to the data bit 601.

A data bit 62 may indicate a flag bit of a target LPD.

For the three solutions mentioned above:
For the first solution, the transmitting end interface may set the data bit 62 in the packet header of the first data packet 501 as the target LPD, and the packet header of another data packet does not include the flag bit that indicates the target LPD. For example, the data bit 62 is set to 25, indicating that sleep time period of the transmitting end interface is 25 microseconds.

For the second solution, the transmitting end interface may set the data bit 62 in the packet header of the last data packet 503 as the target LPD, and the packet header of another data packet does not include the flag bit that indicates the target LPD. For example, the data bit 62 is set to 25, indicating that sleep time period of the transmitting end interface is 25 microseconds.

For the third solution, a packet header of each data packet sent by the transmitting end interface includes the data bit 62. In this case, the transmitting end interface may set the data bit 62 in the packet header of each data packet depending on whether the current data packet enters a sleep mode after being sent. For example, if the transmitting end interface does not enter the sleep mode after sending the current data packet, in other words, the sleep time period is 0, the data bit 62 of the current data packet may be set to "0". If the transmitting end interface enters the sleep mode after sending the current data packet, the data bit 62 is set to the target LPD for entering the sleep mode. For example, the data bit 62 may be directly set to 25, indicating that the sleep time period of the transmitting end interface is 25 microseconds.

A function of a data bit 604 is similar to that of the data bit 601, and is also a flag bit that indicates another function unrelated to the data transmission mode in this embodiment of this application. In this embodiment, two data bits may be allocated to the data bit 601.

A data bit 605 is a flag bit that indicates the check information after PH 610-1 is checked. In other words, after the PH 610-1 including the data bit 62 is checked, the check information is obtained, and then the data bit 605 is set by using the check information. In an example, the check information may be information obtained by using parity (parity) check or error checking and correcting (error checking and correcting, ECC).

In an example of obtaining the check information by using ECC, after a receiving end interface receives the data packet 600A, an ECC operation is performed on each data bit in the PH 610-1, a new ECC result is calculated, an exclusive-OR operation is performed on the new ECC result and the ECC result in 605 to obtain a fault code, and then the fault code is used to determine whether an error exists in the transmission process. In an example, if the PH 610-1 has 64-bit data, the data bit 605 may be set to 7 data bits, where the 7 data bits include at least one data bit for error correcting and two data bits for error checking.

In conclusion, the transmitting end interface may send the target LPD by using the packet header of the data packet. In this way, when obtaining the data packet, the receiving end interface may further learn related information that is about to enter a sleep transmission mode, so that a specific sequence for starting and ending does not need to be additionally transmitted. In this way, the transmitting end interface, the receiving end interface, and the communication link do not need to reserve a circuit for sending and receiving the specific sequence. This further reduces power consumption. On this basis, both the transmitting end interface and the receiving end interface may reuse an original error checking and correcting mechanism in the packet header of the data packet. This ensures accuracy of the foregoing information.

In addition, for the data packet 503, a data packet shown in the data packet 600B may be further used. In other words, in addition to the target LPD, the packet header of the data packet 503 further includes information indicating a sleep state, in other words, the packet header of the data packet 503 includes the sleep state and a target sleep time period (namely, the target LPD). Based on this, this embodiment of this application further provides a data packet structure of the data packet 600B. A difference between the data packet 600B and the data packet 600A lies in a part of packet header. Therefore, for brevity, a same part is not described herein again. As shown in FIG. 6, in the PH 610-2, the data bit 62 may be replaced with the data bit 602 and the data bit 603. In other words, the PH 610-2 includes:

The data bit 602 is a state flag bit that indicates whether the transmitting end interface enters a low-power state (low-power state, LPS). In an implementation, if the transmitting end interface enters a low-power transmission mode after sending the data packet 600B, the data bit 602 may be set to "1". If the transmitting end interface enters or maintains the high-speed data transmission mode after sending the data packet 600B, the data bit 602 may be set to "0".

The data bit 603 may indicate a time flag bit of the target LPD that enters the low-power state, in other words, the target LPD mentioned in FIG. 5A. When the data bit 602 is set to "1", the data bit 603 is correspondingly set to the target LPD (for example, 15 microseconds). When the transmitting end interface does not enter the LPS or continues to perform the high-speed data transmission mode (in other words, the data bit 602 is set to "0"), the data bit 603 may be set to "0".

In conclusion, the transmitting end interface may set the state flag bit (for example, the data bit 602) and the time flag bit (for example, the data bit 603) in the packet header of the data packet, and send the data packet to the transmitting end interface. In this way, when obtaining the data packet, the transmitting end interface may further learn related information that is about to enter the sleep transmission mode.

It can be learned from the foregoing embodiments in FIG. 5A and FIG. 5B that the transmitting end interface may send the target LPD of the data packet to the receiving end interface. When the foregoing embodiments are performed, performance of the transmitting end interface may be tested, or a person skilled in the art may need to adjust the performance of the transmitting end interface to implement the foregoing embodiments. Based on this, in a scenario in which the sleep time period (in other words, the target LPD) is fixed and a real-time requirement is not high, in the method for determining the data transmission mode according to the example embodiments of this application, the sleep time period may be sent to the transmitting end interface by using a first interface or a storage unit, so that operations performed by the person skilled in the art to start the transmitting end interface to implement the method in this embodiment of this application are reduced, and an existing interface may be properly used. This implements interface multiplexing.

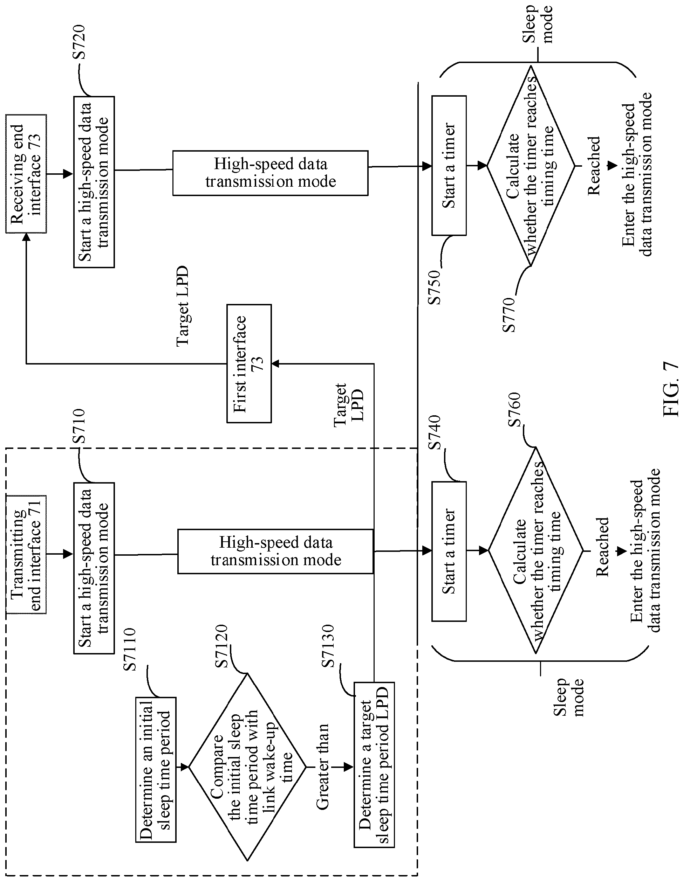

With reference to FIG. 7, the following describes embodiments in which a transmitting end interface sends a target LPD to a receiving end interface in other manners. It should be noted that the following embodiments are applicable to a scenario in which a sleep time period (in other words, a target LPD) is fixed and a real-time requirement is low.

Refer to FIG. 7. The following describes an embodiment in which the target LPD is sent to the receiving end interface 72 by using a first interface 73. Detailed description is provided herein with reference to FIG. 7. It should be noted that a data packet in these embodiments may use a data packet format of a standard protocol. In other words, each part (for example, a packet header, a packet footer, or a payload) of the data packet does not include a data bit indicating the target LPD.

In this embodiment, the first interface 73 may indicate a data interface other than the transmitting end interface 71 and the receiving end interface 72, and the data interface may transmit the data packet or instructions based on an existing protocol layer. For example, the first interface 73 may include an inter-integrated circuit (inter-integrated circuit, I2C) interface, a serial peripheral interface (serial peripheral interface, SPI) interface, and the like.

For ease of description, in this embodiment, the transmitting end interface 71 and the receiving end interface 72 have two modes: a low-power data transmission mode and a high-speed data transmission mode. For ease of description, the transmitting end interface 71 and the receiving end interface 73 are camera interfaces in a terminal device 100, and the camera interfaces are C/D-PHY high-speed interfaces.

In an implementation, a user may trigger a related control in the terminal device 100 to start the transmitting end interface 71. For example, the user may tap a camera icon on the terminal device 100. After detecting the tapping of the user, the terminal device 100 may invoke a kernel layer to start the camera interface and an A/V interface. The camera interface may be used as the transmitting end interface 71, and the A/V interface that displays an image shot by the camera interface 71 may be used as the receiving end interface 73.

In step S710, the transmitting end interface 71 starts the high-speed data transmission mode, and in step S720, the receiving end interface 72 starts the high-speed data transmission mode.

In a possible implementation, the transmitting end interface 71 and the receiving end interface 72 may be set by default to start the high-speed data transmission mode after being started. In another possible implementation, the terminal device 100 may send start instructions that are used to start the high-speed data transmission mode to the transmitting end interface 71 and the receiving end interface 72 by using another data interface. The transmitting end interface 71 and the receiving end interface 72 may start the high-speed data transmission mode after receiving the instructions.

Then, the transmitting end interface may perform step S7110 to step S7130. Because step S7110 to step S7130 are the same as step S5110 to step S5130, details are not described herein again.

Then, the transmitting end interface 71 may send the determined target LPD to the first interface 73, and the first interface sends the determined target LPD to the receiving end interface 72. The target LPD may exist in a form of instructions or the data packet. This is not limited in this application. In this embodiment, the target LPD is determined by the transmitting end interface 71 and sent to the first interface 73. In addition, the first interface 73 may further obtain the target LPD in another manner, which is specifically as follows:

In an optional implementation, the interface 73 may determine the target LPD, and send the target LPD to the receiving end interface 72. For example, the camera interface is used as the receiving end interface. The interface 73 may determine the target LPD based on a frame rate, resolution, and a link wake-up time of the camera interface. In addition, in an implementation, another processing unit may be used to determine the target LPD based on the frame rate, the resolution, and the link wake-up time of the camera interface, and send the target LPD to the receiving end interface 72.

In step S740, the transmitting end interface 71 may start a timer. In implementation, the transmitting end interface 71 may determine a start time point for starting the timer, and then start the timer at the start time point.

When the resolution and the frame rate are fixed, the transmitting end interface 71 may determine an amount of data (for example, a quantity of data packets) transmitted in the high-speed data transmission mode. Therefore, the timer may be started after a specific quantity of data packets are transmitted. Similarly, the receiving end interface 72 may also start the timer in step S750 in the foregoing manner.

In step S760, the transmitting end interface 71 may calculate whether the timer reaches timing time, and after the timer reaches the timing time, a related module for high-speed data transmission in the transmitting end interface 71 is started, to enter the high-speed data transmission mode.

In addition, in step S770, the receiving end interface 72 may calculate whether the timer reaches the timing time, and after the timer reaches the timing time, the related module for high-speed data transmission in the receiving end interface 72 is started, to enter the high-speed data transmission mode.

It may be learned from the foregoing embodiments that, after determining the target LPD in a current frame, the transmitting end interface 71, the first interface 73, or another processing unit sends the target LPD to the receiving end interface, so that the receiving end interface 72 may perform a corresponding sleep mode in a next frame. Therefore, in the foregoing embodiments, after sleep information (in other words, the target LPD) is sent to the receiving end interface by using the first interface 73 in the current frame, the sleep mode is implemented in the next frame, and a delay exists. Therefore, this embodiment shown in FIG. 7 is applicable to a scenario in which a sleep time period (in other words, the target LPD) is fixed and a real-time requirement is not high.

Refer to FIG. 7. The foregoing describes an embodiment in which the target LPD is sent to the transmitting end interface by using the first interface. In a possible implementation, the transmitting end interface may further store the LPD by using a storage unit (for example, a register), and then send a storage address of the storage unit to the transmitting end interface. In this way, the receiving end interface may read the target LPD stored in the storage unit by using the storage address. Similarly, this implementation is applicable to a scenario in which the sleep time period (in other words, the target LPD) is fixed and the real-time requirement is not high.

In these scenarios, after being started, the receiving end interface may directly obtain the target LPD from the first interface 73 or the storage unit, and implement synchronization between two data transmission ends (the transmitting end interface and the receiving end interface) in a data transmission mode in a next frame.

In conclusion, in the scenario in which the sleep time period (in other words, the target LPD) is fixed and the real-time requirement is not high, in the method for determining the data transmission mode according to the example embodiments of this application, the first interface or the storage unit may send the sleep time period (in other words, the LPD) to the transmitting end interface, so that operations performed by a person skilled in the art to start the transmitting end interface to implement the method in this embodiment of this application are reduced, and an existing interface may be properly used. This implements interface multiplexing.

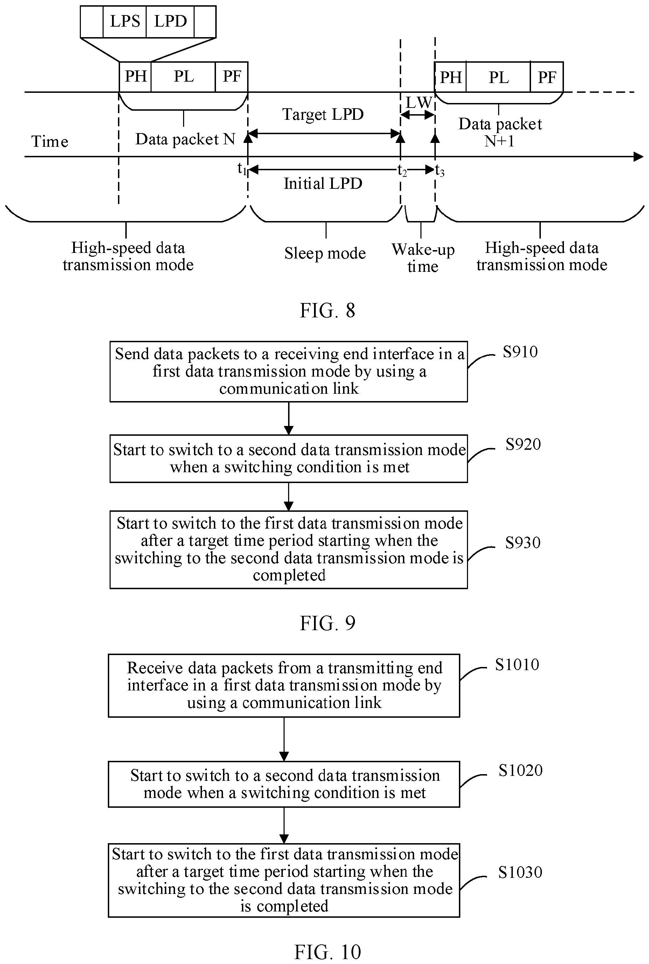

For more intuitive understanding of embodiments of this application, a case in which a time axis is introduced is described. FIG. 8 is a schematic diagram of a transmitting end interface and a receiving end interface switching from a high-speed data transmission mode to a sleep mode by using a data packet according to an embodiment of this application. In this embodiment, the transmitting end interface may send a data packet to the receiving end interface by using a format of a data packet 600A, where a packet header of the data packet may include an LPS and an LPD.

In this embodiment, after the transmitting end interface and the receiving end interface are started, data transmission may be first performed in a high-speed data transmission mode until the transmitting end interface sends a data packet N. The N herein may indicate a last data packet in a data transmission process, in other words, the transmitting end interface enters the sleep mode after sending the data packet N. The transmitting end interface and the receiving end interface may determine a target LPD that is to sleep based on a packet header part in the data packet. The transmitting end interface, the communication link, and the receiving end interface are prepared to enter the high-speed data transmission mode after the target LPD, and enter the high-speed data transmission mode after the communication link wake-up time.

Refer to FIG. 8. Before a time point t₁, the transmitting end interface, a communication terminal, and the receiving end interface all perform the high-speed data transmission mode. At the time point t₁, after sending the data packet N, the transmitting end interface starts an internal timer thereof, and after receiving the data packet N, the receiving end interface starts an internal timer thereof. Timing time of the foregoing timers is a time period (in other words, the target LPD in the figure) from the time point t₁ to the time point t₂. In other words, in the time period from the time point t₁ to the time point t₂, the transmitting end interface, the communication terminal, and the receiving end interface all perform the sleep mode. Then, the timers of the transmitting end interface and the receiving end interface reach the timing time after the target LPD. In this case, the transmitting end interface, the receiving end interface, and the communication link enter wake-up time, in other words, a time period (that is, LW in the figure) from the time point t₂ to the time point t₃ may be used as wake-up time for the transmitting end interface, the communication terminal, and the receiving end interface to perform the high-speed data transmission mode. Because start time of a module related to high-speed data transmission needs to be started on the transmitting end interface and the receiving end interface is less than wake-up time of waking up the communication link, the wake-up time is reserved. After the time point t₃, the transmitting end interface, the communication terminal, and the receiving end interface may perform the high-speed data transmission mode.

In conclusion, the time point t₁ indicates a time point at which the timer is started. The timer is a unit configured to perform timing on a sleep time period. In an implementation, both the transmitting end interface and the receiving end interface have the timer. The transmitting end interface may start the timer after sending the data packet N, and the receiving end interface may start the timer after receiving the data packet N. A time period (an initial LPD) between the data packet N and a data packet N+1 indicates the sleep time period in which sleep is required. The t₂ indicates a wake-up moment of the communication link. The t₃ indicates that the transmitting end interface, the communication link, and the receiving end interface can perform the high-speed data transmission mode.

In an optional embodiment, the transmitting end interface may determine whether the initial LPD is greater than communication link wake-up time LW. If the initial LPD is less than the communication link wake-up time LW, in other words, time for the receiving end interface to enter the sleep mode is not enough to wake up the communication link, the transmitting end interface does not perform the sleep mode.

When it is determined that the initial LPD is greater than the communication link wake-up time LW, the transmitting end interface may determine the target LPD (for example, a time period between t₁ and t₂), set the timing time of the timer as the target LPD, and provide the time period LPD for the receiving end interface by using the data packet N. In an implementation, the transmitting end interface enters the sleep mode (at the time point ti) after sending the data packet N. After receiving the data packet N, the receiving end interface may start the timer, and set the timing time of the timer as the target LPD.

After the target LPD, the transmitting end interface, the communication link, and the receiving end interface wake up and/or start a circuit used for high-speed data transmission within the communication link wake-up time LW. Finally, at the time point t₃, the transmitting end interface may transmit the data packet N+1 in the high-speed data transmission mode.

With reference to the foregoing embodiments, refer to FIG. 9 and FIG. 10. Embodiments of a method for determining a data transmission mode are respectively described from perspectives of a transmitting end interface and a receiving end interface.

The method for determining the data transmission mode shown in FIG. 9 is performed by the transmitting end interface, and the method includes the following steps:

Step S910: Send data packets to the receiving end interface in a first data transmission mode by using a communication link. This step may correspond to step S510 and step S530 in FIG. 5A, and details are not described herein again.

Step S920: Start to switch to a second data transmission mode when a switching condition is met. This step corresponds to a starting condition in step S540 in FIG. 5A, and details are not described herein again.

Step S930: Start to switch to the first data transmission mode after a target time period starting when the switching to the second data transmission mode is completed, where a data transmission rate of the first data transmission mode is higher than a data transmission rate of the second data transmission mode. The target time period may indicate a target LPD mentioned above, and an example of this step corresponds to step S540 and step S560 in FIG. 5A. Details are not described herein again.

In a possible implementation, a first data packet or a last data packet in the data packets includes the target time period; alternatively, each data packet in the data packets includes mode information, where the mode information indicates whether the switching to the second data transmission mode starts after a current data packet, and when the mode information indicates that the switching to the second data transmission mode starts after a current data packet, the mode information includes the target time period. Examples of the first data packet, the last data packet, and the solution of each data packet mentioned above are described in detail with reference to FIG. 5B, and details are not described herein again. In addition, the mode information included in each data packet may indicate a data bit 62 in a data packet 600A in FIG. 6, and may further indicate a data bit 602 and a data bit 603 in a data packet 600B in FIG. 6.

In a possible implementation, the method further includes: sending the target time period to the receiving end interface by using a first interface, where the first interface is different from the transmitting end interface and the receiving end interface. The first interface may indicate the first interface 73 in FIG. 7. This embodiment is described in detail with reference to FIG. 7, and details are not described herein again.

In a possible implementation, the method further includes: determining an initial time period that lasts after the switching to the second data transmission mode; determining whether the initial time period is longer than link wake-up time, where the link wake-up time indicates time for waking up the communication link; and determining the target time period by using the initial time period and the link wake-up time when the initial time period is longer than the link wake-up time. The initial time period may correspond to an initial sleep time period in FIG. 5A. Based on this, this embodiment may correspond to step S5110 to step S5130 in FIG. 5A or step S7110 to step S7130 in FIG. 7. Details are not described herein again.

In a possible implementation, the target time period is not longer than a remaining time period obtained by subtracting the link wake-up time from the initial time period. When the initial time period corresponds to the initial sleep time period, and the target time period corresponds to the target LPD, an embodiment in which the target time period is determined by using the initial time period and the link wake-up time is described in detail with reference to FIG. 5A, and details are not described herein again.

In a possible implementation, the switching condition includes that a quantity of the data packets reaches a preset quantity, or the mode information indicates that the switching to the second data transmission mode starts after the current data packet. An example of the switching condition has been described above when the transmitting end interface 51 performs a start condition to start a timer in step S540 in FIG. 5A, and details are not described herein again.

In a possible implementation, the first data transmission mode includes a high-speed data transmission mode, the second data transmission mode includes a sleep mode, and a transmission rate in the high-speed data transmission mode is higher than a transmission rate in the sleep mode. The embodiments in FIG. 5A, FIG. 7, and FIG. 8 are described above with reference to a setting in which the first data transmission mode is the high-speed data transmission mode and the second data transmission mode is the sleep mode, and details are not described herein again.

The method for determining a data transmission mode shown in FIG. 10 is performed by a receiving end interface, and the method includes the following steps:

Step S1010: Receive data packets from a transmitting end interface in a first data transmission mode by using a communication link. This step corresponds to step S520 and step S530 in FIG. 5A.

Step S1020: Start to switch to a second data transmission mode when a switching condition is met. This step corresponds to a starting condition of step S550 in FIG. 5A, and details are not described herein again.

Step S1030: Start to switch to a first data transmission mode after a target time period starting when the switching to the second data transmission mode is completed, where a data transmission rate of the first data transmission mode is higher than a data transmission rate of the second data transmission mode. The target time period may indicate a target LPD mentioned above, and an example of this step corresponds to step S550 and step S570 in FIG. 5A. Details are not described herein again.

In a possible implementation, a first data packet or a last data packet in the data packets includes the target time period; alternatively, each data packet in the data packets includes mode information, where the mode information indicates whether the switching to the second data transmission mode starts after a current data packet, and when the mode information indicates that the switching to the second data transmission mode starts after a current data packet, the mode information includes the target time period. Examples of the first data packet, the last data packet, and the solution of each data packet mentioned above are described in detail with reference to FIG. 5B, and details are not described herein again. In addition, the mode information included in each data packet may indicate a data bit 62 in a data packet 600A in FIG. 6, and may further indicate a data bit 602 and a data bit 603 in a data packet 600B in FIG. 6.

In a possible implementation, the data packets are received by the receiving end interface from the transmitting end interface; and the method further includes: obtaining the target time period by using a first interface, where the first interface is different from the transmitting end interface and the receiving end interface. The first interface may indicate the first interface 73 in FIG. 7. This embodiment is described in detail with reference to FIG. 7, and details are not described herein again.

In a possible implementation, the method further includes: determining an initial time period that lasts after the switching to the second data transmission mode; determining whether the initial time period is longer than link wake-up time, where the link wake-up time indicates time for waking up the communication link; and determining the target time period by using the initial time period and the link wake-up time when the initial time period is longer than the link wake-up time. The initial time period may correspond to an initial sleep time period in FIG. 5A. Based on this, this embodiment may correspond to step S5110 to step S5130 in FIG. 5A or step S7110 to step S7130 in FIG. 7. Details are not described herein again.

In a possible implementation, the target time period is not longer than a remaining time period obtained by subtracting the link wake-up time from the initial time period. When the initial time period corresponds to the initial sleep time period, and the target time period corresponds to the target LPD, an embodiment in which the target time period is determined by using the initial time period and the link wake-up time is described in detail with reference to FIG. 5A, and details are not described herein again.

In a possible implementation, the switching condition includes that a quantity of the data packets reaches a preset quantity, or the mode information indicates that the switching to the second data transmission mode starts after the current data packet. An example of the switching condition has been described above when the receiving end interface 53 performs a start condition to start a timer in step S550 in FIG. 5A, and details are not described herein again.

In a possible implementation, the first data transmission mode includes a high-speed data transmission mode, the second data transmission mode includes a sleep mode, and a transmission rate in the high-speed data transmission mode is higher than a transmission rate in the sleep mode.

In a possible implementation, the first data transmission mode includes a high-speed data transmission mode, the second data transmission mode includes a sleep mode, and a transmission rate in the high-speed data transmission mode is higher than a transmission rate in the sleep mode. The embodiments in FIG. 5A, FIG. 7, and FIG. 8 are described above with reference to a setting in which the first data transmission mode is the high-speed data transmission mode and the second data transmission mode is the sleep mode, and details are not described herein again.

In addition, an embodiment of this application may further provide a data transmission system. The data transmission system may include a data transmission apparatus that performs the method in FIG. 9 and a data transmission apparatus that performs the method in FIG. 10.

An embodiment of this application provides a data transmission apparatus. The apparatus includes a processor and a memory that is configured to store instructions executable by the processor. When the processor is configured to execute the instructions, the foregoing method is implemented.

An embodiment of this application provides a non-volatile computer-readable storage medium, where the non-volatile computer-readable storage medium stores computer program instructions. When the computer program instructions are executed by a processor, the foregoing method is implemented.

An embodiment of this application provides a computer program product, including computer-readable code or a non-volatile computer-readable storage medium carrying computer-readable code. When the computer-readable code is run in a processor of an electronic device, the processor in the electronic device performs the foregoing method.

The computer-readable storage medium may be a tangible device that may retain and store instructions used by an instruction execution device. The computer-readable storage medium may be, for example, but is not limited to, an electrical storage device, a magnetic storage device, an optical storage device, an electromagnetic storage device, a semiconductor storage device, or any suitable combination thereof. More specific examples (a non-exhaustive list) of the computer-readable storage medium include: a portable computer disk, a hard disk, a random access memory (Random Access Memory, RAM), a read-only memory (Read-Only Memory, ROM), an erasable and programmable read-only memory (an Electrically Programmable Read-Only Memory, EPROM, or a flash memory), a static random access memory (Static Random Access Memory, SRAM), a portable compact disk read-only memory (Compact Disk Read-Only Memory, CD-ROM), a digital versatile disc (Digital Video Disk, DVD), a memory stick, a floppy disk, a mechanical coding device, for example, a punching card or a groove protrusion structure that stores instructions, and any suitable combination thereof.

The computer-readable program instructions or code described herein may be downloaded from the computer-readable storage medium to each computing/processing device, or downloaded to an external computer or an external storage device over a network, such as the Internet, a local area network, a wide area network, and/or a wireless network. The network may include copper transmission cables, optical fiber transmission, wireless transmission, routers, firewalls, switches, gateway computers, and/or edge servers. A network adapter card or a network interface in each computing/processing device receives computer-readable program instructions from a network, and forwards the computer-readable program instructions for storage in the computer-readable storage medium in each computing/processing device.

The computer program instructions used to perform operations in this application may be assembly instructions, instruction set architecture (Instruction Set Architecture, ISA) instructions, machine instructions, machine-related instructions, microcode, firmware instructions, status setting data, or source code or target code written in one or any combination of more programming languages. The programming languages include object-oriented programming languages such as Smalltalk and C++, and a conventional procedural programming language such as "C" or a similar programming language. The computer-readable program instructions may be executed entirely on a user computer, partly on the user computer, as a stand-alone software package, partly on the user computer and partly on a remote computer, or entirely on the remote computer or a server. When a remote computer is involved, the remote computer may be connected to a user computer over any type of network, including a local area network (Local Area Network, LAN) or a wide area network (Wide Area Network, WAN), or may be connected to an external computer (for example, connected by using an Internet service provider over the Internet). In some embodiments, an electronic circuit, for example, a programmable logic circuit, a field programmable gate array (Field-Programmable Gate Array, FPGA), or a programmable logic array (Programmable Logic Array, PLA), is customized by using status information of computer-readable program instructions. The electronic circuit may execute the computer-readable program instructions, to implement various aspects of this application.

The various aspects of this application are described herein with reference to the flowcharts and/or the block diagrams of the method, the apparatus (system), and the computer program product according to embodiments of this application. It should be understood that each block in the flowcharts and/or the block diagrams and combinations of blocks in the flowcharts and/or the block diagrams may be implemented by computer-readable program instructions.

These computer-readable program instructions may be provided to a processor of a general-purpose computer, a special-purpose computer, or another programmable data processing apparatus to produce a machine, so that the instructions, when executed by the processor of the computer or the another programmable data processing apparatus, create an apparatus for implementing functions/actions specified in one or more blocks in the flowcharts and/or the block diagrams. Alternatively, these computer-readable program instructions may be stored in a computer-readable storage medium. These instructions enable a computer, a programmable data processing apparatus, and/or another device to work in a specific manner. Therefore, the computer-readable medium storing the instructions includes an artifact that includes instructions for implementing various aspects of functions/actions specified in one or more blocks in the flowcharts and/or the block diagrams.

Alternatively, these computer-readable program instructions may be loaded onto a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implements functions/actions specified in one or more blocks in the flowcharts and/or the block diagrams.

The flowcharts and the block diagrams in the accompanying drawings illustrate system architectures, functions, and operations of possible implementations of apparatuses, systems, methods, and computer program products according to a plurality of embodiments of this application. In this regard, each block in the flowcharts or the block diagrams may represent a module, a program segment, or a part of the instructions, where the module, the program segment, or the part of the instructions includes one or more executable instructions for implementing a specified logical function. In some alternative implementations, the functions marked in the blocks may also occur in a sequence different from that marked in the accompanying drawings. For example, two consecutive blocks may actually be executed substantially in parallel, and sometimes may be executed in a reverse order, depending on a function involved.

It should also be noted that each block in the block diagrams and/or the flowcharts and a combination of blocks in the block diagrams and/or the flowcharts may be implemented by hardware (for example, a circuit or an ASIC (Application-Specific Integrated Circuit, application-specific integrated circuit)) that performs a corresponding function or action, or may be implemented by a combination of hardware and software, for example, firmware.

Although the present invention is described with reference to embodiments, in a process of implementing the present invention that claims protection, a person skilled in the art may understand and implement another variation of the disclosed embodiments by viewing the accompanying drawings, the disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Embodiments of this application are described above. The foregoing descriptions are examples, are not exhaustive, and are not limited to the disclosed embodiments. Many modifications and changes are clear to a person of ordinary skill in the art without departing from the scope and spirit of the described embodiments. The selection of terms used in this specification is intended to best explain the principles of embodiments, practical application, or improvements to technologies in the market, or to enable another person of ordinary skill in the art to understand embodiments disclosed in this specification.

## Claims

1. A method for determining a data transmission mode, comprising:
sending data packets to a receiving end interface in a first data transmission mode by using a communication link;
starting to switch to a second data transmission mode when a switching condition is met; and
starting to switch to the first data transmission mode after a target time period starting when the switching to the second data transmission mode is completed, wherein
a data transmission rate in the first data transmission mode is higher than a data transmission rate in the second data transmission mode.

2. The method according to claim 1, wherein a first data packet or a last data packet in the data packets comprises the target time period; or each data packet in the data packets comprises mode information, wherein the mode information indicates whether the switching to the second data transmission mode starts after a current data packet, and when the mode information indicates that the switching to the second data transmission mode starts after the current data packet, the mode information comprises the target time period.

3. The method according to claim 1, wherein the data packets are sent by a transmitting end interface to the receiving end interface; and the method further comprises:
sending the target time period to the receiving end interface by using a first interface, wherein the first interface is different from the transmitting end interface and the receiving end interface.

4. The method according to claim 1, wherein the method further comprises:
determining an initial time period that lasts after the switching to the second data transmission mode;
determining whether the initial time period is longer than link wake-up time, wherein the link wake-up time indicates time for waking up the communication link; and
determining the target time period by using the initial time period and the link wake-up time when the initial time period is longer than the link wake-up time.

5. The method according to claim 4, wherein the target time period is not longer than a remaining time period obtained by subtracting the link wake-up time from the initial time period.

6. The method according to any one of claims 1 to 5, wherein the switching condition comprises that a quantity of the data packets reaches a preset quantity, or the mode information indicates that the switching to the second data transmission mode starts after the current data packet.

7. The method according to any one of claims 1 to 6, wherein the first data transmission mode comprises a high-speed data transmission mode, the second data transmission mode comprises a sleep mode, and a transmission rate in the high-speed data transmission mode is higher than a transmission rate in the sleep mode.

8. A method for determining a data transmission mode, comprising:
receiving data packets from a transmitting end interface in a first data transmission mode by using a communication link;
starting to switch to a second data transmission mode when a switching condition is met; and
starting to switch to the first data transmission mode after a target time period starting when the switching to the second data transmission mode is completed, wherein
a data transmission rate in the first data transmission mode is higher than a data transmission rate in the second data transmission mode.

9. The method according to claim 8, wherein a first data packet or a last data packet in the data packets comprises the target time period; or each data packet in the data packets comprises mode information, wherein the mode information indicates whether the switching to the second data transmission mode starts after a current data packet, and when the mode information indicates that the switching to the second data transmission mode starts after the current data packet, the mode information comprises the target time period.

10. The method according to claim 8, wherein the data packets are received by a receiving end interface from the transmitting end interface, and the method further comprises:
obtaining the target time period by using a first interface, wherein the first interface is different from the transmitting end interface and the receiving end interface.

11. The method according to claim 8, wherein the method further comprises:
determining an initial time period that lasts after the switching to the second data transmission mode;
determining whether the initial time period is longer than link wake-up time, wherein the link wake-up time indicates time for waking up the communication link; and
determining the target time period by using the initial time period and the link wake-up time when the initial time period is longer than the link wake-up time.

12. The method according to claim 11, wherein the target time period is not longer than a remaining time period obtained by subtracting the link wake-up time from the initial time period.

13. The method according to any one of claims 8 to 12, wherein the switching condition comprises that a quantity of the data packets reaches a preset quantity, or the mode information indicates that the switching to the second data transmission mode starts after the current data packet.

14. The method according to any one of claims 8 to 13, wherein the first data transmission mode comprises a high-speed data transmission mode, the second data transmission mode comprises a sleep mode, and a transmission rate in the high-speed data transmission mode is higher than a transmission rate in the sleep mode.

15. A data transmission apparatus, configured to perform the method according to any one of claims 1 to 8.

16. A data transmission apparatus, comprising a processor and a memory, wherein the processor is coupled to the memory, and the processor is configured to perform the method according to any one of claims 1 to 8.

17. A data transmission apparatus, comprising a processor and a data interface, wherein the processor performs the method according to any one of claims 1 to 8 by using the data interface.

18. A data transmission apparatus, configured to perform the method according to any one of claims 8 to 14.

19. A data transmission apparatus, comprising a processor and a memory, wherein the processor is coupled to the memory, and the processor is configured to perform the method according to any one of claims 8 to 14.

20. A data transmission apparatus, comprising a processor and a data interface, wherein the processor performs the method according to any one of claims 8 to 14 by using the data interface.

21. A data transmission system, comprising the data transmission apparatus according to any one of claims 15 to 17 and the data transmission apparatus according to any one of claims 18 to 20.

22. A non-volatile computer-readable storage medium, wherein the non-volatile computer-readable storage medium stores computer program instructions, and when the computer program instructions are executed by a processor, the method according to any one of claims 1 to 7 is implemented, or the method according to any one of claims 8 to 14 is implemented.

23. A computer program product, wherein when the computer program product runs on a computer, the computer is enabled to implement the method according to any one of claims 1 to 7 or the method according to any one of claims 8 to 14 during execution.
